# EUROPÄISCHE PATENTSCHRIFT

(11) **EP 2 881 333 B1**
(45) Veröffentlichungstag und Bekanntmachung des Hinweises auf die Patenterteilung: **31.08.2016**
(21) Anmeldenummer: 13195889.4
(22) Anmeldetag: 05.12.2013
(51) Int. Cl.: B65C 1/02, B65C 9/42, B65G 47/68

(54) **Verfahren und Vorrichtung zum Vereinigen von Linien umfassend einen Etikettenspender**
Method and apparatus for line-merging provided with a label dispenser
Procédé et dispositif de jonction de lignes comprenant un distributeur d'étiquettes

(43) Veröffentlichungstag der Anmeldung: 10.06.2015
(73) Patentinhaber: MULTIVAC Sepp Haggenmüller SE & Co. KG, 87787 Wolfertschwenden (DE)
(72) Erfinder: Ehrmann Elmar, 87730 Bad Grönenbach (DE); Spix Guido, 89079 Ulm (DE)
(74) Vertreter: Grünecker Patent- und Rechtsanwälte PartG mbB

(56) Entgegenhaltungen:
- EP-A1- 0 952 085
- WO-A1-2007/031866
- DE-A1-102010 017 821
- DE-A1-102011 112 328
- US-A- 5 133 827
- US-A- 5 750 004
- US-A- 5 954 913
- US-B1- 6 543 505

## Beschreibung

Die Erfindung bezieht sich auf eine Linienvereiniger für Packungen gemäß dem Oberbegriff des Anspruchs 1 sowie auf ein Verfahren mit den Merkmalen des Anspruchs 9.

Es ist aus der DE 10 2010 017 821 A1 ein gattungsgemäßer Linienvereiniger bekannt, um vereinzelte Packungen, die mehrspurig parallel zueinander transportiert werden, auf eine einzelne Spur von aufeinanderfolgenden Packungen zu vereinigen.

Aus der DE 41 35 106 C2 ist eine Etikettiervorrichtung bekannt, die Etiketten auf Packungen aufbringt, die auf einem darunter befindlichen Transportband aufeinanderfolgend transportiert werden.

Bei einer Verpackungsanlage, die sowohl einen Linienvereiniger umfasst, um ein mehrspuriges Format von Packungen aus einer Tiefziehverpackungsmaschine auf eine einzelne Spur zu vereinigen, als auch einen Etikettierer, um die Packungen nach dem Linienvereiniger auf einem einspurigen Transportband mit einem Etikett zu versehen, sind der Linienvereiniger und das Transportsystem mit Etikettierer nacheinander angeordnet und beide zusammen benötigen in Transportrichtung gesehen eine große Aufstellfläche.

Aufgabe der vorliegenden Erfindung ist es, den gemeinsamen Platzbedarf für einen Linienvereiniger und ein Transportsystem mit einem Etikettenspender zu verringern.

Diese Aufgabe wird gelöst durch einen Linienvereiniger mit den Merkmalen des Anspruchs 1 bzw. durch ein Verfahren zum Betrieb eines solchen Linienvereinigers mit den Merkmalen des Anspruchs 9. Vorteilhafte Weiterbildungen der Erfindung sind in den Unteransprüchen angegeben.

Der erfindungsgemäße Linienvereiniger umfasst wenigstens ein Transportband und zwei verstellbaren Führungsschienen mit jeweils einer Führung, wobei der Linienvereiniger eine Steuerung und einen Etikettenspender umfasst, um Etiketten auf eine Packung aufzubringen. Dabei ist ein Sensor vorgesehen und mit der Steuerung verbunden, um eine Vorderkante einer jeder zu etikettierenden Packung zu erfassen. Dies führt zu dem großen Vorteil, dass ein für den Etikettenspender vorgesehenes einspuriges Transportband entfallen kann und somit weniger Antriebe für Transportbänder notwendig sind und dass der Platzbedarf lediglich der Aufstellfläche eines Linienvereinigers entspricht.

Vorzugsweise ist der Etikettenspender quer zur Transportrichtung verstellbar, um sich den unterschiedlich möglichen Positionen der Packungen, die durch eine oder zwei verstellbare Führungsschienen erzeugbar sind, während des Transports entlang des Etikettenspenders anpassen zu können oder um die Position des Etiketts auf der Packung selbst beeinflussen zu können.

Der Etikettenspender ist bevorzugt vertikal verstellbar, um sich unterschiedlichen Höhen der Packungen anpassen zu können. Dabei kann die vertikale Verstellung manuell oder mittels eines Antriebs ausgeführt sein, der wiederum von der Steuerung auf die gewünschte Position verstellbar ist.

In einer besonders vorteilhaften Ausführungsform sind wenigstens zwei Stopper und ein einziges Transportband vorgesehen, um mittels der Stopper einzelne Spuren von Packungen nacheinander freizugeben. Dabei kann je ein Stopper für jede Spur vorgesehen sein. Alternativ können zwei nacheinander angeordnete Transportbänder vorgesehen sein und dabei die Stopper zwischen den zwei Transportbändern vorgesehen sein. Die Stopper stellen eine konstruktiv einfache, platzsparende und kostensparende Ausführung dar und können bei dieser Ausführungsform unterhalb der Transportebene angeordnet sein.

Die Stopper sind vorzugsweise mittels oberhalb des Transportbands angeordneten Pneumatikzylindern vertikal bewegbar und einzeln von der Steuerung ansteuerbar ausgeführt.

Bevorzugt steuert die Steuerung das Transportband und den Etikettenspender. Dabei kann die Spendegeschwindigkeit des Etikettenbandes mit der Transportgeschwindigkeit des Transportbands synchronisiert werden, um eine exakte Platzierung des Etiketts auf der Packung zu ermöglichen.

In einer besonders vorteilhaften Ausführungsform ist die Steuerung ein Teil einer Maschinensteuerung einer stromaufwärts angeordneten Tiefziehverpackungsmaschine, um eine eigene Steuerung für den Etikettenspender entfallen zu lassen und die Synchronisierung des Linienvereinigers mit dem Etikettenspender zusammen zu verbessern, womit die Leistung gesteigert wird.

Der Linienvereiniger ist vorzugsweise für mehr als drei Spuren von Packungen konfiguriert.

Das erfindungsgemäße Verfahren zum Betrieb eines solchen Linienvereinigers beinhaltet, dass der Linienvereiniger eine Reihe von vereinzelten Packungen von einer Tiefziehverpackungsmaschine übernimmt und auf eine Spur von aufeinanderfolgenden Packungen vereinigt. Das Verfahren zeichnet sich dadurch aus, dass ein Sensor im Bereich des Linienvereinigers angeordnet ist und die an ihm vorbeilaufende Vorderkante einer Packung erfasst, und dass ein Etikettenspender die Packung mit einem Etikett versieht, während sich die Packung noch ganz oder teilweise auf dem Transportband des Linienvereinigers befindet. Auch dieses Verfahren ermöglicht einen sehr kompakten Aufbau und einen multifunktionellen Betrieb des Linienvereinigers.

Dabei halten die Stopper vorzugsweise jeweils eine Packung einer Spur bei laufendem Transportband an und geben die nebeneinander benachbarten Packungen nacheinander frei, sodass die Packungen mit einem Abstand von zwei aufeinander folgenden Packungen einspurig den Linienvereiniger verlassen.

Im Folgenden wird ein vorteilhaftes Ausführungsbeispiel der Erfindung anhand einer Zeichnung näher erläutert. Im Einzelnen zeigen:
- Fig. 1: einen erfindungsgemäßen Linienvereiniger mit einem Etikettenspender,
- Fig. 2: einen erfindungsgemäßen Linienvereiniger in der Draufsicht.

Gleiche Komponenten sind in den Figuren durchgängig mit gleichen Bezugszeichen versehen.

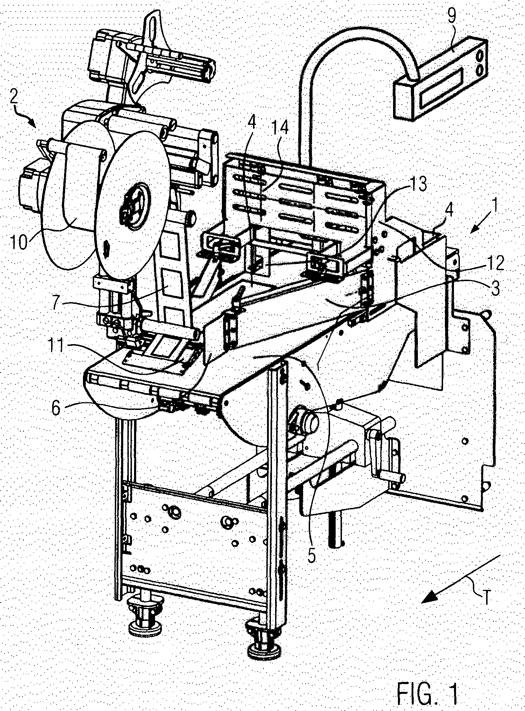

Fig. 1 zeigt einen erfindungsgemäßen Linienvereiniger 1 mit einem Etikettenspender 2, der in einer Transportrichtung T am Ende des Linienvereinigers 1 angeordnet ist. Zwei bewegliche Führungsschienen 3 werden derart konvergierend zueinander verstellt, um am stromabwärts gelegenen Ende der Führungsschienen 3 eine Lücke bzw. Öffnung für Packungen 4 zu erzeugen, die lediglich etwas breiter ist, als die Breite der Packung 4 selbst. Dabei kann die Lücke an einer beliebigen Position quer zur Transportrichtung T erzeugt werden. In der Fig. 1 ist die Lücke im mittleren Bereich quer zur Transportrichtung oberhalb bzw. auf einem Transportband 5 gezeigt. Die Führungsschienen 3 weisen an einem stromabwärts gelegenen Ende zusätzliche Führungen 6 auf, um die Packung 4 entlang der Transportrichtung T auszurichten. Somit kann ein Etikett 7 in seiner Lage quer zur Transportrichtung T exakt auf der Packung 4 positioniert werden.

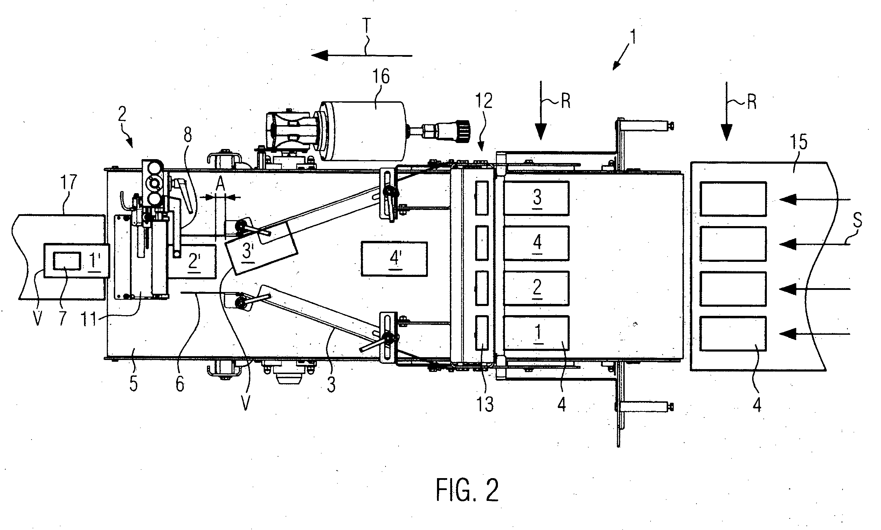

Ein Sensor 8 (siehe Fig. 2), der am Etikettenspender 2 vorgesehen ist, erfasst eine Vorderkante V einer zu etikettierenden Packung 4, während die Packungen 4 entlang der Führungen 6 transportiert wird. Der Sensor 8 kann als Lichtschranke oder Näherungssensor ausgeführt sein und ist mit einer Steuerung 9 verbunden und übermittelt das Signal, nämlich das Erkennen der Vorderkante V der Packung 4, an diese. Die Steuerung 9 steuert die Bewegung des zu spendenden Etiketts 7 mittels Geschwindigkeit und Weg des Etikettenbands 10 zu und entlang einer Spendekante 11, um das Etikett 7 vom Etikettenband 10 abzulösen und auf die Packung 4 aufzubringen. Vorzugsweise ist die Geschwindigkeit des Etikettenbands 10 während des Spendevorgangs auf die Packung 4 identisch mit der Geschwindigkeit des Transportbands 5. Stromaufwärts ist eine Stoppervorrichtung 12 vor den Führungsschienen 3 angeordnet, um eine Reihe R von Packungen 4 anzuhalten, während das Transportband 5 läuft. Hierfür ist für jede Packung 4 je ein Stopper 13 vorgesehen, der mittels eines Pneumatikzylinders 14 vertikal zwischen einer unteren Stellung zum Stoppen der Packung 4 und einer oberen Stellung zum Freigeben der Packung 4 bewegbar ist. Die Pneumatikzylinder 14 bzw. die Stopper 13 werden von der Steuerung 9 separat und zeitversetzt angesteuert, um die Packungen 4 nacheinander freizugeben.

Der Ablauf des Vereinigens auf eine einzelne Spur von aufeinanderfolgenden Packungen 4 und der Ablauf des Etikettenspendens werden anhand der Fig. 2 näher erläutert. Von dem Etikettenspender 2 ist zur besseren Übersicht in der Draufsicht nur die Spendekante 11 gezeigt. In der Draufsicht auf den Linienvereiniger 1 ist dargestellt, wie von einer Tiefziehverpackungsmaschine 15 eine Reihe R von vier Packungen 4 übernommen wird. Eine Reihe R von Packungen 4 ist definiert durch eine Mehrzahl von Packungen 4, die quer zur Transportrichtung T nebeneinander angeordnet sind. Eine Spur S von Packungen 4 definiert eine oder mehrere Packungen 4, die in Transportrichtung T hintereinander angeordnet sind. Die Tiefziehverpackungsmaschine 15 führt somit vier Spuren S mit jeweils einer Packung 4 dem Linienvereiniger 1 zu. Das Transportband 5 des Linienvereinigers 1 wird von einem Motor 16 angetrieben, wobei die Geschwindigkeit über die Steuerung 9 eingestellt wird oder der Motor 16 mit einer konstanten Geschwindigkeit läuft. Das Transportband 5 kann als ein Gliederband oder als ein Gurtband ausgeführt sein, wobei als Beschichtung Gummi, Silikon oder Polyurethan eingesetzt werden kann. Die Packungen 4 werden jeweils durch einen Stopper 13 angehalten. Die Stopper 13 werden von der Steuerung 9 einzeln zum Freigeben der Packung 4 angehoben und zum Anhalten einer nächsten nachfolgenden Packung 4 abgesenkt.

Während eine Reihe R von Packungen 4 mit den Nummern 1,2,3,4 von den Stoppern 13 angehalten wird, befinden sich die Packungen 4 einer zuvor zugeführten Reihe R mit den Nummern 1',2',3',4' bereits beim Vereinigen, das heißt stromabwärts nach den Stoppern 13. Dazu wurde beispielsweise der Stopper 13 für die Packung 4 mit Nummer 1' als erster angehoben, dann der Stopper 13 für die Packung 4 mit Nummer 2', dann der Stopper 13 für die Packung 4 mit Nummer 3' und als letzter der Stopper 13 für die Packung 4 mit Nummer 4 Dabei wird ein Abstand A zwischen zwei aufeinanderfolgenden Packung 4 erzeugt, indem ein entsprechender zeitlicher Abstand zwischen dem Freigeben dieser Packungen 4 durch die Stopper 13 vorgesehen wird. Dieser Abstand A ist vorteilhaft, damit der Sensor 8 die Vorderkante V einer jeden Packung 4 erkennen kann. In dem gezeigten Ausführungsbeispiel der Fig. 2 sind die Führungsschienen 3 so zueinander konvergierend eingestellt, dass die Packungen 4 aller vier Spuren S den Linienvereiniger 1 hintereinander in einem mittleren Bereich des Transportbands 5 verlassen und an ein weiterführendes Transportband oder eine nachfolgende Produktionseinrichtung 17 übergeben werden, beispielsweise eine Wägeeinheit. Über den Sensor 8 wird die Vorderkante V jeder Packung 4 erkannt und das Etikett 7 entsprechend der gewünschten Lage auf der Packung 4 gespendet bzw. aufgebracht.

Erfindungsgemäß wird das Etikett 7 auf die Packung 4 aufgebracht, während die Packung 4 noch teilweise von den Führungen 6 geführt wird und dabei noch komplett auf dem Transportband 5 aufliegt.

## Patentansprüche

1. Linienvereiniger (1) mit
wenigstens einem Transportband (5) mit einer Transportrichtung (T), und
zwei beweglichen Führungsschienen (3), die zum Erzeugen einer Lücke an einem stromabwärts gelegenen Ende der Führungsschienen (3) konvergierend zueinander verstellbar sind und an ihrem stromabwärts gelegenen Ende jeweils eine Führung (6) umfassen, um eine Packung (4) entlang der Transportrichtung (T) auszurichten,
**dadurch gekennzeichnet, dass**
der Linienvereiniger (1) eine Steuerung (9) und einen Etikettenspender (2) umfasst, die dazu ausgelegt sind, Etiketten (7) auf die Packung (4) aufzubringen, während sich die Packung (4) noch ganz oder teilweise auf dem Transportband (5) des Linienvereinigers (1) befindet und wenigstens teilweise von den Führungen (6) geführt wird, wobei ein Sensor (8) vorgesehen und dieser mit der Steuerung (9) verbunden ist, um eine Vorderkante (V) der Packung (4) zu erfassen.

2. Linienvereiniger nach Anspruch 1, **dadurch gekennzeichnet, dass** der Etikettenspender (2) quer zur Transportrichtung (T) verstellbar ist.

3. Linienvereiniger nach einem der vorangehenden Ansprüche, **dadurch gekennzeichnet, dass** der Etikettenspender (2) vertikal verstellbar ist.

4. Linienvereiniger nach einem der vorangehenden Ansprüche, **dadurch gekennzeichnet, dass** wenigstens zwei Stopper (13) und ein einziges Transportband (5) vorgesehen sind, um mittels der Stopper (13) einzelne Spuren (S) von Packungen (4) nacheinander freizugeben.

5. Linienvereiniger nach Anspruch 4, **dadurch gekennzeichnet, dass** die Stopper (13) mittels jeweils eines oberhalb des Transportbands (5) angeordneten Pneumatikzylinders (14) vertikal bewegbar sind und die Pneumatikzylinder (14) einzeln von der Steuerung (9) ansteuerbar sind.

6. Linienvereiniger nach einem der vorangehenden Ansprüche, **dadurch gekennzeichnet, dass** die Steuerung (9) das Transportband (5) und den Etikettenspender (2) steuert.

7. Linienvereiniger nach Anspruch **6, dadurch gekennzeichnet, dass** die Steuerung (9) Teil einer Maschinensteuerung einer stromaufwärts des Linienvereinigers (1) angeordneten Tiefziehverpackungsmaschine (15) ist.

8. Linienvereiniger nach einem der vorangehenden Ansprüche, **dadurch gekennzeichnet, dass** der Linienvereiniger (1) für mehr als drei Spuren (S) konfiguriert ist.

9. Verfahren zum Betrieb eines Linienvereinigers (1), der ein Transportband (5) mit einer Transportrichtung (T) und zwei bewegliche Führungsschienen (3) aufweist, die zum Erzeugen einer Lücke an ihren stromabwärts gelegenen Enden konvergierend zueinander verstellbar sind und an ihrem stromabwärts gelegenen Ende jeweils eine Führung (6) umfassen,
wobei der Linienvereiniger (1) eine Reihe (R) von vereinzelten Packungen (4) von einer Tiefziehverpackungsmaschine (15) übernimmt und die Packungen (4) auf eine einzige Spur (S) von aufeinanderfolgenden Packungen (4) vereinigt, wobei die Packungen (4) von den Führungen (6) entlang der Transportrichtung (T) ausgerichtet werden,
**dadurch gekennzeichnet, dass**
ein Sensor (8) am Linienvereiniger (1) eine an ihm vorbeilaufende Vorderkante (V) einer Packung (4) erfasst, wobei der Sensor (8) das Erfassen der Vorderkante (V) der Packung (4) an eine Steuerung (9) meldet, die einen Etikettenspender (2) derart ansteuert, dass der Etikettenspender (2) die Packung (4) mit einem Etikett (7) versieht, während sich die Packung (4) noch ganz oder teilweise auf einem Transportband (5) des Linienvereinigers (1) befindet und wenigstens teilweise von den Führungen (6) geführt wird.

10. Verfahren nach Anspruch 9, **dadurch gekennzeichnet, dass** Stopper (13) jeweils eine Packung (4) einer Spur (S) bei laufendem Transportband (5) anhalten und die nebeneinander benachbarten Packungen (4) nacheinander freigeben, sodass die Packungen (4) mit einem Abstand (A) zwischen zwei aufeinanderfolgenden Packungen (4) einspurig den Linienvereiniger (1) verlassen.

## Claims

1. A line converger (1) comprising
at least one conveyor belt (5) with a conveying direction (T), and
two movable guide rails (3), which are, converging towards one another, adjustable for defining a gap at a downstream end of the guide rails (3), and which each have a guide (6) at their downstream ends for aligning a package (4) along the conveying direction (T),
**characterized in that**
the line converger (1) comprises a control unit (9) and a label dispenser (2), which are configured to apply labels (7) to the package (4) while said package (4) is still located fully or partly on the conveyor belt (5) of the line converger (1) and is at least partially guided by the guides (6), wherein a sensor (8) is provided and connected to the control unit (9) so as to detect a leading edge (V) of the package (4).

2. The line converger according to claim 1, **characterized in that** the label dispenser (2) is adjustable in a direction transversely to the conveying direction (T).

3. The line converger according to one of the preceding claims **characterized in that** the label dispenser (2) is adjustable in a vertical direction.

4. The line converger according to one of the preceding claims **characterized in that** at least two stoppers (13) and a single conveyor belt (5) are provided so as to successively release by means of said stoppers (13) individual lanes (S) of packages (4).

5. The line converger according to claim 4, **characterized in that** the stoppers (13) are vertically movable by means of a respective pneumatic cylinder (14) arranged above the conveyor belt (5) and that the pneumatic cylinders (14) are controllable individually by the control unit (9).

6. The line converger according to one of the preceding claims **characterized in that** the control unit (9) controls the conveyor belt (5) and the label dispenser (2).

7. The line converger according to claim 6, **characterized in that** the control unit (9) is part of a machine control unit of a deep-drawing packaging machine (15) arranged upstream of the line converger (1).

8. The line converger according to one of the preceding claims **characterized in that** the line converger (1) is configured for more than three lanes (S).

9. A method for operating a line converger (1), which comprises a conveyor belt (5) with a conveying direction (T) and two movable guide rails (3), which are, converging towards one another, adjustable for defining a gap at their downstream ends and which each have a guide (6) at their downstream ends,
said line converger (1) receiving a row (R) of separate packages (4) from a deep-drawing packaging machine (15) and converging the packages (4) into a single lane (S) of successive packages (4), wherein the packages (4) are aligned by the guides (6) along the conveying direction (T),
**characterized in that**
a sensor (8) on the line converger (1) detects a leading edge (V) of a package (4) moving past said sensor (8), wherein the sensor (8) reports the detection of the leading edge (V) of the package (4) to a control unit (9), which controls a label dispenser (2) such that the label dispenser (2) will apply a label (7) to the package (4) while said package (4) is still located fully or partly on a conveyor belt (5) of the line converger (1) and is at least partially guided by the guides (6).

10. The method according to claim 9, **characterized in that** stoppers (13) stop one package (4) of each lane (S) while the conveyor belt (5) is moving and release the side-by-side neighboring packages (4) one after the other, so that the packages (4) leave the line converger (1) on a single lane with a distance (A) between successive packages (4).

## Revendications

1. Rassembleur de lignes (1) comprenant au moins une bande transporteuse (5) présentant une direction de transport (T), et
deux glissières de guidage (3) mobiles, qui sont réglables de manière à converger l'une vers l'autre pour former un interstice de passage à une extrémité des glissières de guidage (3) située en aval, et qui comportent chacune à son extrémité située en aval, un guide (6), pour orienter un emballage (4) de manière à s'aligner le long de la direction de transport (T), **caractérisé en ce que**
le rassembleur de lignes (1) comprend une commande (9) et un distributeur d'étiquettes (2), qui sont configurés pour appliquer des étiquettes (7) sur l'emballage (4) pendant que l'emballage (4) se trouve encore entièrement ou partiellement sur la bande transporteuse (5) du rassembleur de lignes (1) et est au moins partiellement guidé par les guides (6), un capteur (8) étant prévu et relié à la commande (9) pour détecter et relever un bord avant (V) de l'emballage (4).

2. Rassembleur de lignes selon la revendication 1, **caractérisé en ce que** le distributeur d'étiquettes (2) est réglable transversalement à la direction de transport (T).

3. Rassembleur de lignes selon l'une des revendications précédentes, **caractérisé en ce que** le distributeur d'étiquettes (2) est réglable verticalement.

4. Rassembleur de lignes selon l'une des revendications précédentes, **caractérisé en ce que** sont prévus au moins deux stoppeurs (13) et une seule bande transporteuse (5), en vue de libérer successivement des voies ou lignes (S) individuelles d'emballages (4) au moyen des stoppeurs (13).

5. Rassembleur de lignes selon la revendication 4, **caractérisé en ce que** les stoppeurs (13) peuvent être déplacés verticalement au moyen d'un vérin pneumatique respectif (14) agencé au-dessus de la bande transporteuse (5), et les vérins pneumatiques (14) peuvent être commandés individuellement par la commande (9).

6. Rassembleur de lignes selon l'une des revendications précédentes, **caractérisé en ce que** la commande (9) assure la commande de la bande transporteuse (5) et du distributeur d'étiquettes (2).

7. Rassembleur de lignes selon la revendication 6, **caractérisé en ce que** la commande (9) fait partie d'une commande de machine d'une machine d'emballage par emboutissage ou thermoformage (15) agencée en amont du rassembleur de lignes (1).

8. Rassembleur de lignes selon l'une des revendications précédentes, **caractérisé en ce que** le rassembleur de lignes (1) est configuré pour plus de trois voies ou lignes (S).

9. Procédé de fonctionnement d'un rassembleur de lignes (1) comprenant une bande transporteuse (5) présentant une direction de transport (T), et deux glissières de guidage (3) mobiles, qui sont réglables de manière à converger l'une vers l'autre pour former un interstice de passage à leurs extrémités situées en aval, et qui comportent chacune à son extrémité située en aval, un guide (6),
le rassembleur de lignes (1) reprenant une rangée (R) d'emballages (4) individualisés à partir d'une machine d'emballage par emboutissage ou thermoformage (15) et séparant les emballages (4) sur une seule voie ou ligne (S) d'emballages (4) successifs, les emballages (4) étant orientés par les guides (6), de manière à s'aligner le long de la direction de transport (T), **caractérisé en ce**
**qu'**un capteur (8) sur le rassembleur de lignes (1) détecte ou relève un bord avant (V) d'un emballage (4) passant au-devant de lui, le capteur (8) signalant la détection du bord avant (V) de l'emballage (4) à une commande (9) qui assure la commande d'un distributeur d'étiquettes (2) de manière à ce que le distributeur d'étiquettes (2) munisse l'emballage (4) d'une étiquette (7), pendant que l'emballage (4) se trouve encore entièrement ou partiellement sur une bande transporteuse (5) du rassembleur de lignes (1) et est au moins partiellement guidé par les guides (6).

10. Procédé selon la revendication 9, **caractérisé en ce que** des stoppeurs (13) arrêtent respectivement un emballage (4) d'une voie ou ligne (S) lors de la marche de la bande transporteuse (5), et libèrent successivement les emballages (4) voisins, de sorte que les emballages (4) quittent le rassembleur de lignes (1) sur une seule voie ou ligne, avec une distance (A) entre deux emballages (4) successifs.
